# EUROPÄISCHE PATENTSCHRIFT

(11) **EP 0 910 221 B1**
(45) Veröffentlichungstag und Bekanntmachung des Hinweises auf die Patenterteilung: **16.11.2005**
(21) Anmeldenummer: 98440197.6
(22) Anmeldetag: 07.09.1998
(51) Int. Cl.: H04Q 3/00, H04M 15/00

(54) **Verfahren und Vorrichtung zur variablen, aktuellen Tarifsignalisierung für IN-basierende Mehrwertdienste**
Method and device for signalling the variable up-to-date tariff for added value services based on intelligent networks
Procédé et dispositif pour la signalisation du tarif variable actualisé pour services à valeur ajoutée basés sur un réseau intelligent

(30) Priorität: 15.10.1997 DE 19745437
(43) Veröffentlichungstag der Anmeldung: 21.04.1999
(73) Patentinhaber: ALCATEL, 75008 Paris (FR)
(72) Erfinder: Lautenschlager, Wolfgang, 71287 Weissbach-Flacht (DE); Stahl, Uwe, 71229 Leonberg (DE)
(74) Vertreter: Rausch, Gabriele

(56) Entgegenhaltungen:
- EP-A- 0 452 591
- EP-A- 0 491 497
- EP-A- 0 751 662
- EP-A- 0 779 733
- US-A- 5 537 464

## Beschreibung

Die Erfindung betrifft ein Verfahren und eine Vorrichtung zur variablen, dienstespezifischen Tarifsignalisierung für Mehrwertdienste durch einen angerufenen Zielteilnehmer, der IN (=Intelligent Network)-basierende Dienste in einem Telekommunikations (TK)-Netwerk anbietet, während einer aktuellen Verbindung mit einem anrufenden, einen angebotenen IN-Dienst anfordernden A-Teilnehmer.

Ein solches Verfahren und eine entsprechende Vorrichtung sind beispielsweise aus der EP 0 491 497 B1 bekannt.

Seit einiger Zeit werden in TK-Netzwerken IN-basierende Dienste angeboten, wie beispielsweise Service-Dienstleistungen, die mit Rufnummern mit bestimmten Dienstekennzahlgruppen von rufenden Netzteilnehmern angefordert werden können. Der an das TK-Netzwerk angeschlossene angerufene Zielteilnehmer, der den entsprechenden angeforderten Dienst anbietet, wird vom Netzwerkbetreiber für geleistete Dienste nach bestimmten Tarifen bezahlt, wobei der Netzwerkbetreiber die jeweiligen Gebühren dem anrufenden A-Teilnehmer in Rechnung stellt, der die entsprechenden Dienste angefordert hatte. Dies kann bisher in Form von festen Tarifen pro Anruf oder von zeitabhängigen Tarifen geschehen, was beispielsweise in der DE 42 41 434 A1 beschrieben ist. Derartige zeitabhängige Tarifierungen sind derzeit auch aus dem "Service 190" im Bereich der Deutschen Telekom bekannt.

Aufgrund der immer größer werdenden Komplexität der Gebührenstruktur für Kommunikationsdienstleistungen mit der Zunahme der Anzahl von Netzbetreibern und der Einführung von Mehrwertdiensten ist es wünschenswert, wenn ein anrufender A-Teilnehmer bereits vor der Inanspruchnahme einer Kommunikationsdienstleistung und gegebenenfalls einer zusätzlichen Mehrwertdienstleistung über deren Kosten Informationen erhält und daraufhin unter Umständen die Kommunikationsdienstleistung gar nicht in Anspruch nimmt. Dazu wird in der DE 195 22 988 A1 vorgeschlagen, bereits vor dem Aufbau einer Verbindung aus einem Verbindungswunsch, der von einem anrufenden A-Teilnehmer an das TK-Netzwerk gesendet wird, Tarifierungsdaten unabhängig vom Verbindungsaufbau zu ermitteln und an den Teilnehmer zu senden.

In der EP 0 734 144 A2 ist ein Verfahren und eine Anordnung zum Ermitteln der Benutzergebühr einer Teilnehmereinrichtung eines Telekommunikationsnetzes beschrieben, bei denen eine variable Tarifgestaltung durch die Diensteanbieter ermöglicht wird. Allerdings kann der angerufene Zielteilnehmer nicht direkt aktuell auf den Tarif Einfluß nehmen, sondern die Tarifgestaltung wird, wenn auch variabel, vom TK-Netzwerk vorgegeben.

Die eingangs zitierte EP 0 491 497 B1 schließlich beschreibt ein Tarifierungsverfahren für Mehrwertdienste, bei dem die angerufene Dienstanbietereinrichtung direkt über eine Vermittlungsstelle während einer Verbindung ein aktuelles Tarifsignal an eine dem TK-Netzwerk angeschlossene Kundendatenerfassung weitergibt, die daraus die vom anrufenden A-Teilnehmer zu zahlenden Gebühren berechnet. Nachteilig dabei ist jedoch, daß der angerufene Zielteilnehmer unkontrollierbar und beliebig seine Tarife aktuell gestalten kann.

Aufgabe der vorliegenden Erfindung ist es demgegenüber, ein Verfahren und eine entsprechende Vorrichtung vorzustellen, mit denen Mehrwertdienste, die ohnehin IN-basierend sind, ohne großen Zusatzaufwand auf eine variable Tarifierung durch den angerufenen Zielteilnehmer erweitert werden können, wobei aber eine Berechtigung zur Tarifierung an neutraler Stelle im TK-Netzwerk jeweils überprüft wird.

Erfindungsgemäß wird diese Aufgabe dadurch gelöst, daß der angerufene Zielteilnehmer über seine Dienstteilnehmereinrichtung ein Tarifsignal, welches dem aktuell vom angerufenen Zielteilnehmer geforderten Tarif entspricht, an eine zentrale Steuerlogik im TK-Netzwerk in Form eines Dienststeuerpunktes (SCP = Service Control Point) sendet, daß im Dienststeuerpunkt mittels einer Dienstelogik die Berechtigung des angerufenen Zielteilnehmers zur Erhebung des von ihm geforderten Tarifs überprüft wird, und daß bei Kompatibilität des geforderten Tarifs mit der abgespeicherten Berechtigung des Zielteilnehmers eine entsprechende Gebührenbelastungsinformation vom Dienststeuerpunkt über einen Dienstvermittlungspunkt (SSP = Service Switching Point) an den anfordernden A-Teilnehmer sowie an eine dem TK-Netzwerk angeschlossene Kundendatenerfassung weitergeleitet wird, aus der die Kundendatenerfassung die vom anrufenden A-Teilnehmer zu zahlenden Gebühren berechnet.

Mittels einer "User-To-SCP"-Signalisierung teilt der angerufene Zielteilnehmer über seine Diensteanbietereinrichtung einer entsprechenden Dienstelogik in einem Dienststeuerpunkt mit, welcher Tarif aktuell gelten soll. Im SCP kann dann anhand von gespeicherten Daten des Zielteilnehmers die Berechtigung des geforderten Tarifs überprüft werden. Ist diese gegeben, wird eine entsprechende Gebührenbelastungsinformation an den anrufenden A-Teilnehmer sowie an die Kundendatenerfassung zwecks Gebührenberechnung übermittelt.

Besonders bevorzugt ist eine Variante des erfindungsgemäßen Verfahrens, bei der der aktuelle Tarif dem anrufenden A-Teilnehmer über eine Anzeigeeinrichtung sichtbar gemacht und/oder über sein Endgerät akustisch mitgeteilt wird. Dadurch wird dem anfordernden A-Teilnehmer ermöglicht, aktuell zu entscheiden, ob er den geforderten Tarif bezahlen und die angeforderten Dienste weiter in Anspruch nehmen will oder nicht. Denkbar ist auch eine Untervariante, bei der der angerufene A-Teilnehmer nach der ersten Anzeige des Tarifs zunächst bestätigen muß, ob er mit dem Tarif einverstanden ist, bevor die entsprechende Gebühreninformation von der Kundendatenerfassung übernommen wird und Eingang in die Gebührenrechnung des anfordernden A-Teilnehmers findet.

Im Falle einer Inkompatibilität des geforderten Tarifs mit der Berechtigung des angerufenen Zielteilnehmers ist es vorteilhaft, wenn dem letzteren vom Dienststeuerpunkt optisch und/oder akustisch die ermittelte Inkompatibilität mitgeteilt wird, damit der Zielteilnehmer gegebenenfalls entsprechend reagieren und einen Tarif innerhalb seines Berechtigungsbereiches anfordern kann.

Bei einer weiteren vorteilhaften Variante des erfindungsgemäßen Verfahrens ist vorgesehen, daß die Berechtigung des diensteanbietenden Zielteilnehmers in Form eines minimal und eines maximal zulässigen Tarifwerts im Dienststeuerpunkt abgespeichert wird, und daß im Falle einer Inkompatibilität des geforderten Tarifs mit der Berechtigung des angerufenen Zielteilnehmers automatisch eine Gebührenbelastungsinformation entsprechend dem maximal zulässigen Tarif bei Überschreiten desselben bzw. entsprechend dem minimal zulässigen Tarif bei Unterschreiten desselben an dem anrufenden A-Teilnehmer sowie an die Kundendatenerfassung weitergeleitet wird.

Dadurch kann die Verbindung aufrechterhalten werden, wobei die Gebühren für die in Anspruch genommenen Dienste innerhalb der erlaubten Grenzen bleiben.

Bei einer Weiterbildung der beiden obengenannten Verfahrensvarianten wird dem angerufenen Zielteilnehmer der ermittelte maximale bzw. minimale Grenzwerttarif vom Dienststeuerpunkt übermittelt und über eine Anzeigeeinrichtung an seinem Endgerät sichtbar gemacht und/oder akustisch mitgeteilt wird, so daß sich der Zielteilnehmer auf den von seiner Anforderung abweichenden geltenden Tarif einstellen und die Verbindung aufrechterhalten, den geforderten Tarif ändern oder die Verbindung abbrechen kann.

In den Rahmen der Erfindung fällt auch eine Vorrichtung zur Durchführung des oben beschriebenen Verfahrens, bei der an der Dienstteilnehmereinrichtung des angerufenen Zielteilnehmers eine Eingabeeinheit zur Eingabe von geforderten Tarifen und Weiterleitung von entsprechenden Tarifsignalen an den Dienststeuerpunkt vorgesehen ist.

Besonders bevorzugt ist eine Weiterbildung dieser Ausführungsform, bei der die Eingabeeinheit eine numerische Tastatur umfaßt bzw. durch Betätigung eines besonderen Signalknopfes eine numerische Tastatur am Endgerät des Zielteilnehmers aktivieren kann.

Daneben ist aber auch eine Spracheingabe des geforderten aktuellen Tarifs über das TK-Endgerät des angerufenen Zielteilnehmers denkbar. Dazu muß allerdings im Dienststeuerpunkt eine Einrichtung zur Spracherkennung, zumindest von gesprochenen Ziffern vorhanden sein.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: eine schematisierte Schaltung zur Durchführung des erfindungsgemäßen Verfahrens; und
- Fig. 2: ein Schaltschema zur variablen Tarifsignalisierung nach dem Stand der Technik.

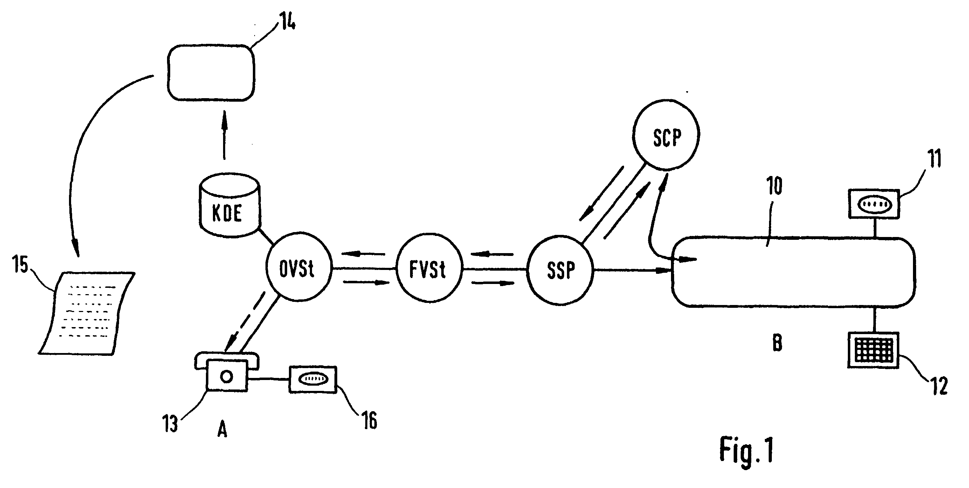

Beim erfindungsgemäßen Verfahren, wie es in Fig. 1 schematisch dargestellt ist, kann ein angerufener Zielteilnehmer B, der in einem TK-Netzwerk IN-basierende Dienste anbietet, während einer aktuellen Verbindung mit einem anrufenden, einen angebotenen IN-Dienst anfordernden A-Teilnehmer entweder über ein an seine Dienstteilnehmereinrichtung 10 angeschlossene Eingabeeinheit 12 oder direkt akustisch jeweils den vom Zielteilnehmer B gewünschten Tarif eingeben und entsprechende Tarifsignale an einen Dienststeuerpunkt SCP im intelligenten Netzwerk weiterleiten.

Im Dienststeuerpunkt SCP wird mittels einer Dienstelogik die Berechtigung des angerufenen Zielteilnehmers B zur Erhebung des von ihm geforderten Tarifs überprüft und bei Kompatibilität des geforderten Tarifs mit der abgespeicherten Berechtigung des Zielteilnehmers B eine entsprechende Gebührenbelastungsinformation über einen Dienstvermittlungspunkt SSP, eine Fernvermittlungsstelle FVSt, einer Ortsvermittlungsstelle OVSt an ein Endgerät 13 des anrufenden A-Teilnehmers weiterleitet. Gleichzeitig wird eine entsprechende Gebührenbelastungsinformation vom Dienststeuerpunkt SCP auch an eine Kundendatenerfassung KDE weitergeleitet, in der die vom anrufenden A-Teilnehmer zu zahlenden Gebühren berechnet und an eine Nachverarbeitungseinheit 14 weitergegeben werden, die eine entsprechende Rechnung 15 ausstellt und zu gegebener Zeit an den A-Teilnehmer versendet.

Über eine Anzeigeeinrichtung 11 bzw. 16 kann der aktuelle Tarif dem angerufenen Zielteilnehmer B bzw. dem anrufenden A-Teilnehmer sichtbar gemacht werden. Alternativ oder zusätzlich kann der aktuelle Tarif auch nur über die Dienstteilnehmereinrichtung 10 bzw. über das Endgerät 13 akustisch mitgeteilt werden. Dadurch hat der A-Teilnehmer die Möglichkeit, bei Anforderung eines Tarifes, der ihm für die angebotene Dienstleistung zu hoch erscheint, die Verbindung abzubrechen, der angerufene Zielteilnehmer B kann einen ihm falsch erscheinenden aktuellen Tarif umgehend korrigieren.

In der Figur 1 ist die Weiterleitung der Calling Line Identity durch entsprechende Pfeile von der Ortsvermittlungsstelle OVSt, über die Fernvermittlungsstelle FVSt und den Dienstvermittlungspunkt SSP zum Dienststeuerpunkt SCP angedeutet, während die Tarifsignalisierung durch entsprechende Pfeile in der anderen Richtung angezeigt ist. Ein Doppelpfeil zwischen dem Dienststeuerpunkt SCP und der Dienstteilnehmereinrichtung 10 zeigt die erfindungsgemäße bidirektionale "User-to-SCP"-Signalisierung an, die die Tarifsignalisierung vermittelt. Im Falle mangelnder Kompatibilität des vom Zielteilnehmer B geforderten Tarifs kann dem letzteren eine entsprechende Mitteilung direkt vom Dienststeuerpunkt SCP übermittelt werden, so daß sich der Zielteilnehmer B auf die Situation entsprechend einstellen kann.

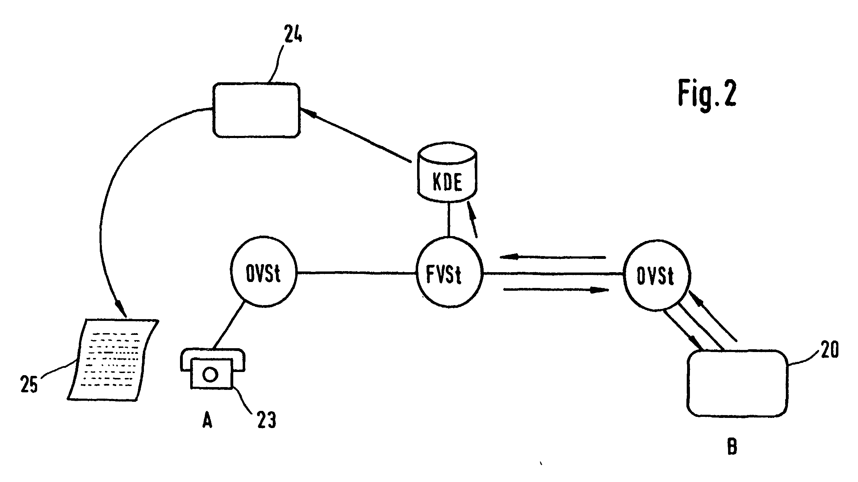

Bei dem in Fig. 2 dargestellten Schema nach dem Stand der Technik übermittelt der angerufene Zielteilnehmer B über seine Dienstteilnehmereinrichtung 20 direkt seinen Tarif an die Ortsvermittlungsstelle OVSt und die Fernvermittlungsstelle FVSt, welche die entsprechende Gebührenbelastungsinformation kritiklos an die Kundendatenerfassung KDE und die daran angeschlossene Nachverarbeitungseinrichtung 24 weitergibt, welche daraufhin eine entsprechende Gebührenrechnung 25 erstellt, die dem das Endgerät 23 benutzenden A-Teilnehmer, der den entsprechenden Dienst vom Zielteilnehmer B angefordert hatte, zu gegebener Zeit zugesandt wird. Weitere Einflußmöglichkeiten zur variablen, dienstspezifischen Tarifgestaltung bestehen bei dem bekannten System nicht.

## Patentansprüche

1. Verfahren zur variablen, dienstespezifischen Tarifsignalisierung für Mehrwertdienste durch einen angerufenen Zielteilnehmer (B), der IN, Intelligent Network, basierende Dienste in einem Telekommunikations, TK, -Netzwerk anbietet, während einer aktuellen Verbindung mit einem anrufenden, einen angebotenen IN-Dienst anfordernden A-Teilnehmer,
**dadurch gekennzeichnet,**
**daß** der angerufene Zielteilnehmer (B) über seine Dienstteilnehmereinrichtung (10) ein Tarifsignal, welches dem aktuell vom angerufenen Zielteilnehmer (B) geforderten Tarif entspricht, an eine zentrale Steuerlogik im TK-Netzwerk in Form eines Dienststeuerpunktes (SCP), Service Control point, sendet,
**daß** im Dienststeuerpunkt (SCP) mittels einer Dienstelogik die Berechtigung des angerufenen Zielteilnehmers (B) zur Erhebung des von ihm geforderten Tarifs überprüft wird,
und **daß** bei Kompatibilität des geforderten Tarifs mit der abgespeicherten Berechtigung des Zielteilnehmers (B) eine entsprechende Gebührenbelastungsinformation vom Dienststeuerpunkt (SCP) über einen Dienstvermittlungspunkt (SSP), Service Switching Point, an den anfordernden A-Teilnehmer sowie an eine dem TK-Netzwerk angeschlossene Kundendatenerfassung (KDE) weitergeleitet wird, aus der die Kundendatenerfassung (KDE) die vom anrufenden A-Teilnehmer zu zahlenden Gebühren berechnet.

2. Verfahren nach Anspruch 1, **dadurch gekennzeichnet, daß** der aktuelle Tarif dem anrufenden A-Teilnehmer über eine Anzeigeeinrichtung (16) sichtbar gemacht und/oder über sein Endgerät (13) akustisch mitgeteilt wird.

3. Verfahren nach Anspruch 1 oder 2, **dadurch gekennzeichnet, daß** im Falle einer Inkompatibilität des geforderten Tarifs mit der Berechtigung des angerufenen Zielteilnehmers (B) dem letzteren vom Dienststeuerpunkt (SCP) optisch und/oder akustisch die ermittelte Inkompatibilität mitgeteilt wird.

4. Verfahren nach einem der vorhergehenden Ansprüche, **dadurch gekennzeichnet, daß** die Berechtigung des diensteanbietenden Zielteilnehmers (B) in Form eines minimal und eines maximal zulässigen Tarifwerts im Dienststeuerpunkt (SCP) abgespeichert wird, und daß im Falle einer Inkompatibilität des geforderten Tarifs mit der Berechtigung des angerufenen Zielteilnehmers (B) automatisch eine Gebührenbelastungsinformation entsprechend dem maximal zulässigen Tarif bei Überschreiten desselben bzw. entsprechend dem minimal zulässigen Tarif bei Unterschreiten desselben an den anrufenden A-Teilnehmer sowie an die Kundendatenerfassung (KDE) weitergeleitet wird.

5. Verfahren nach Anspruch 3 und 4, **dadurch gekennzeichnet, daß** dem angerufenen Zielteilnehmer (B) der ermittelte maximale bzw. minimale Grenzwerttarif vom Dienststeuerpunkt (SCP) übermittelt und über eine Anzeigeeinrichtung (11) an seinem Endgerät sichtbar gemacht und/oder akustisch mitgeteilt wird.

6. Vorrichtung zur Durchführung des Verfahrens nach einem der vorhergehenden Ansprüche, **dadurch gekennzeichnet, daß** an der Dienstteilnehmereinrichtung (10) des angerufenen Zielteilnehmers (B) eine Eingabeeinheit (12) zur Eingabe von geforderten Tarifen und Weiterleitung von entsprechenden Tarifsignalen an den Dienststeuerpunkt (SCP) vorgesehen ist.

7. Vorrichtung nach Anspruch 6, **dadurch gekennzeichnet, daß** die Eingabeeinheit (12) eine numerische Tastatur umfaßt bzw. durch Betätigung eines besonderen Signalknopfes eine numerische Tastatur am Endgerät des Zielteilnehmers (B) aktivieren kann.

## Claims

1. A method for the variable, service-specific signaling of tariff rates for value-added services by a called destination subscriber (B) offering IN-, intelligent-network-, based services in a telecommunications network, during a connection with a calling A-subscriber who is requesting an offered IN service,
**characterized in**
**that** the called destination subscriber (B) sends a rate signal corresponding to the tariff rate being currently demanded by the called destination subscriber (B) via his or her service subscriber facility (10) to a central control logic in the telecommunications network in the form of a service control point (SCP),
**that** at the service control point (SCP), the authority of the called destination subscriber (B) to levy the rate demanded is checked by means of a service logic, and
**that**, if the rate demanded is compatible with the stored authority of the destination subscriber (B), corresponding charging information will be routed from the service control point (SCP) via a service switching point (SSP) to the requesting A-subscriber and to a customer data acquisition unit (KDE) connected to the telecommunications network, which customer data acquisition unit (KDE) calculates from said charging information the charges to be paid by the calling A-subscriber.

2. A method as claimed in claim 1, **characterized in that** the current tariff rate is made visible to the calling A-subscriber via a display device (16) and/or communicated to him or her acoustically via his or her terminal (13).

3. A method as claimed in claim 1 or 2, **characterized in that**, if the requested tariff rate is incompatible with the authority of the called destination subscriber (B), this is signaled to the latter visually or audibly from the service control point (SCP).

4. A method as claimed in any one of the preceding claims, **characterized in that** the authority of the service-offering destination subscriber (B) is stored at the service control point (SCP) in the form of a minimum and a maximum allowable rate value, and that, if the rate demanded is incompatible with the authority of the called destination subscriber (B), charging information corresponding to the maximum allowable rate if the same is exceeded, or to the minimum allowable rate if the rate is below the same, is automatically routed to the calling A-subscriber and the customer data acquisition unit (KDE).

5. A method as claimed in claims 3 and 4, **characterized in that** the maximum and minimum limit rates determined are communicated from the service control point (SCP) to the called destination subscriber (B) and made visible to the latter via a display device (11) at his or her terminal and/or indicated acoustically.

6. An apparatus for carrying out the method according to any one of the preceding claims, **characterized in that** at the service subscriber facility (10) of the called destination subscriber (B), an input unit (12) is provided for entering demanded tariff rates and for routing corresponding rate signals to the service control point (SCP).

7. An apparatus as claimed in claim 6, **characterized in that** the input unit (12) comprises a numeric keyboard, or that a numeric keyboard at the terminal of the destination subscriber (B) can be activated by operating a special signal button.

## Revendications

1. Procédé de signalisation du tarif variable spécifique au service pour des services à valeur ajoutée par un abonné destinataire appelé (B), lequel propose des services basés sur un réseau intelligent, Intelligent Network, dans un réseau de télécommunication, TK, pendant une liaison en cours avec un abonné A appelant qui sollicite un service IN proposé,
**caractérisé en ce que** l'abonné destinataire appelé (B) envoie, par le biais de son équipement d'abonné de service (10), un signal de tarif qui correspond au tarif actuellement demandé par l'abonné destinataire appelé (B) à une logique de commande centrale dans le réseau TK sous la forme d'un point de contrôle de service (SCP = Service Control Point), que l'autorisation de l'abonné destinataire appelé (B) à percevoir le tarif qu'il demande est vérifiée dans le point de contrôle de service (SCP) au moyen d'une logique de service, et qu'en cas de compatibilité entre le tarif demandé et l'autorisation enregistrée de l'abonné destinataire (B), une information de taxation correspondante est transmise par le point de contrôle de service (SCP) à l'abonné A demandeur ainsi qu'à un collecteur de données de client (KDE) raccordé au réseau TK par le biais d'un point de commutation de service (SSP = Service Switching Point), à partir de laquelle le collecteur de données de client (KDE) calcule les frais à payer par l'abonné A appelant.

2. Procédé selon la revendication 1, **caractérisé en ce que** le tarif actuel est visualisé à l'abonné A appelant par le biais d'un dispositif d'affichage (16) et/ou lui est communiqué sous forme sonore par le biais de son terminal (13).

3. Procédé selon la revendication 1 ou 2, **caractérisé en ce qu'**en cas d'incompatibilité entre le tarif demandé et l'autorisation de l'abonné destinataire appelé (B), l'incompatibilité déterminée est communiquée à ce dernier par le point de contrôle de service (SCP) sous forme visuelle et/ou sonore.

4. Procédé selon l'une des revendications précédentes, **caractérisé en ce que** l'autorisation de l'abonné destinataire (B) qui propose le service est enregistrée dans le point de contrôle de service (SCP) sous la forme d'une valeur de tarif minimale et maximale autorisée et qu'en cas d'incompatibilité du tarif demandé avec l'autorisation de l'abonné destinataire appelé (B), une information de taxation correspondant au tarif maximum autorisé en cas de dépassement de celui-ci ou correspondant au tarif minimum autorisé si le tarif demandé y est inférieur est transmise automatiquement à l'abonné A appelant ainsi qu'au collecteur de données de client (KDE).

5. Procédé selon les revendications 3 et 4, **caractérisé en ce que** le tarif limite maximum ou minimum déterminé est transmis à l'abonné destinataire appelé (B) par le point de contrôle de service (SCP) et visualisé sur son terminal par le biais d'un dispositif d'affichage (11) et/ou communiqué de manière sonore.

6. Dispositif pour mettre en oeuvre le procédé selon l'une des revendications précédentes, **caractérisé en ce qu'**il est prévu sur l'équipement d'abonné de service (10) de l'abonné destinataire appelé (B) une unité de saisie (12) pour saisir les tarifs demandés et transmettre les signaux de tarif correspondants au point de contrôle de service (SCP).

7. Dispositif selon la revendication 6, **caractérisé en ce que** l'unité de saisie (12) comprend un clavier numérique ou alors un clavier numérique peut être activé sur le terminal de l'abonné destinataire (13) en actionnant un bouton de signalisation particulier.
